**Europäisches Patentamt**

**European Patent Office**

**Office européen des brevets**

(11) Numéro de publication: **0 1 1 0 797**
**B1**

(12) **FASCICULE DE BREVET EUROPEEN**

(45) Date de publication du fascicule du brevet:
**14.09.88**

(21) Numéro de dépôt: **83420180.8**

(22) Date de dépôt: **28.11.83**

(51) Int. Cl.⁴: **A 61 C 13/00,** A 61 C 5/10,
A 61 C 19/04

(54) **Procédé de réalisation d'une prothèse dentaire.**

(30) Priorité: **30.11.82 FR 8220349**

(43) Date de publication de la demande:
**13.06.84 Bulletin 84/24**

(45) Mention de la délivrance du brevet:
**14.09.88 Bulletin 88/37**

(84) Etats contractants désignés:
**AT BE CH DE FR GB IT LI LU NL SE**

(56) Documents cités:
**EP - A - 0 009 734**
**EP - A - 0 025 911**
**EP - A - 0 033 492**
**EP - A - 0 040 165**
**EP - A - 0 054 785**
**BE - A - 488 345**
**CH - A - 168 873**
**FR - A - 977 385**
**FR - A - 1 302 740**
**FR - A - 2 348 688**
**US - A - 1 598 816**
**US - A - 1 743 910**
**US - A - 2 859 088**
**US - A - 3 052 983**
**US - A - 3 858 372**
**US - A - 3 861 044**
**US - A - 4 182 312**
**US - A - 4 187 611**

(73) Titulaire: **Duret, Francois, Rue Paul Claudel, Le Grand Lemps Isère (FR)**

(72) Inventeur: **Duret, Francois, Rue Paul Claudel, Le Grand Lemps Isère (FR)**

(74) Mandataire: **Maureau, Philippe, Cabinet Germain & Maureau Le Britannia - Tour C 20, bld Eugène Déruelle Boîte Postale 3011, F-69392 Lyon Cédex 03 (FR)**

## Description

La présente invention a pour objet un procédé de réalisation d'une prothèse dentaire, et plus spécialement d'une prothèse dentaire fixe, telle que couronne ou bridge.

Un procédé conforme à la première partie de la revendication 1 est connu de la demande EP-A-40 165.

La réalisation de telles prothèses nécessite, habituellement, les opérations suivantes:
- coulée des empreintes;
- recherche de l'occlusion après fabrication d'une maquette;
- montage sur cire pour vérification esthétique;
- fabrication par la technique de la cire perdue des parties métalliques ou en résine;
- vérification et polissage;
- pose en bouche.

Cette méthode, qui est très ancienne, présente de nombreux inconvénients et notamment:
- l'importance du travail en bouche;
- des délais de réalisation importants;
- une précison du travail liée à l'expérience du prothésiste;
- une discordance entre les appréciations du dentiste et celles du prothésiste;
- un coût élevé en main d'œuvre;
- une dépendance vis-à-vis des matériaux de fonderie;
- la nécessité de plusieurs interventions en bouche qui sont longues et pénibles pour le patient.

La présente invention vise à remédier à ces inconvénients.

A cet effet, le procédé qu'elle concerne, mettant en œuvre une saisie de la forme de la zone d'implantation, et consistant en fonction de cette saisie de forme qui est traitée par un calculateur définissant la forme de la prothèse à réaliser, à usiner ladite prothèse à l'aide d'un centre de travail assisté de ce calculateur, est caractérisé en ce qu'il consiste à utiliser une machine-outil équipée d'une fraise travaillant selon trois axes, et en ce qu'il consiste, en tenant compte de l'angle d'attaque de l'outil d'usinage, c'est-à-dire la direction possible de pénétration de l'outil dans la matière, à décomposer ladite prothèse en un ou plusieurs éléments unitaires, chaque élément étant une pièce dont toutes les surfaces peuvent être usinées à l'aide de cette machine, puis à usiner indépendamment au moins une partie de chacun des éléments, et enfin à les assembler, et éventuellement à terminer l'usinage.

Selon un mode de mise en œuvre, dans le cas de la réalisation d'un ensemble prothétique de plusieurs éléments, tel qu'un bridge, il consiste à déterminer la forme de la partie de la prothèse située du côté de la gencive en tenant compte dans le logiciel de trois paramètres, à savoir: les surfaces des deux extrémités de la prothèse et le point bas du pontique, à réaliser le positionnement théorique des dents que comporte la prothèse, en faisant tout d'abord apparaître la totalité de l'arcade, puis en déterminant des plans proximaux, dont le nombre est fonction de la longueur de l'arcade, chaque plan proximal étant défini comme étant médian à la droite réunissant deux points de contact de la prothèse avec les dents demeurant en bouche, ou un point de contact et un point de contact entre deux dents théoriques, puis à placer les dents théoriques sur les plans proximaux, en leur faisant, éventuellement, subir une déformation, en vue du respect de l'enveloppe, et enfin à sélectionner l'arcade en un ensemble de tronçons de droites ou d'arcs de grand rayon, en tenant compte de l'angle d'attaque de l'outil d'usinage, puis à usiner chaque tronçon avec ménagement d'un système de fixation intermédiaire entre deux éléments appartenant à deux tronçons adjacents.

D'autres modes particuliers de réalisation de l'invention sont définis dans les revendications dépendantes.

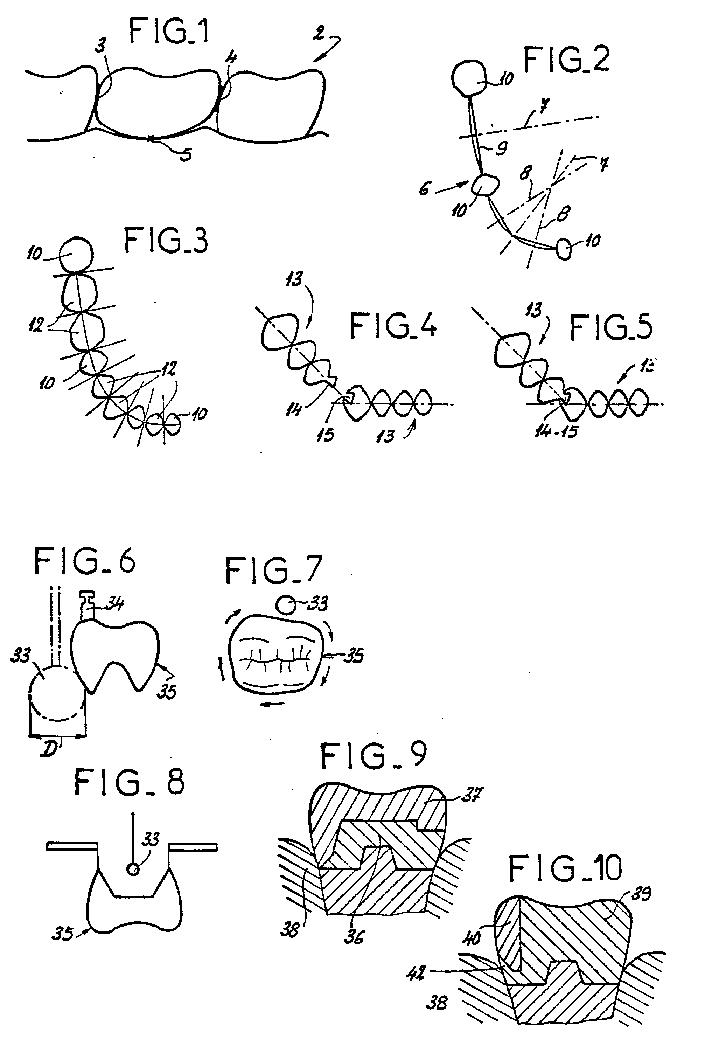

La figure 1 du dessin schématique annexé représente un bridge (2) pour lequel il convient de tenir compte des surfaces, respectivement (3) et (4), des deux extrémités de la prothèse, et du point bas du pontique portant la référence (5).

Selon une autre caractéristique de ce procédé, il convient de réaliser le positionnement des dents que comporte la prothèse en faisant, tout d'abord, apparaître la totalité de l'arcade (6), comme représenté à la figure 2, puis en déterminant des plans proximaux (7, 8), chaque plan proximal (7) étant défini comme étant médian à la droite (9) réunissant deux points de contact de la prothèse avec des dents (10) demeurant en bouche, tandis que chaque plan proximal (8) est défini comme étant perpendiculaire à la droite réunissant un point de contact et un point de contact entre deux dents théoriques. Après détermination des plans proximaux, le procédé consiste à placer des dents théoriques (12) sur ceux-ci en leur faisant, éventuellement, subir une déformation en vue du respect de l'enveloppe, comme montré à la figure 3.

Pour réaliser l'usinage d'une prothèse comportant plusieurs éléments, il est intéressant, comme montré aux figures 4 et 5 du dessin annexé, de sectionner l'arcade à réaliser en un ensemble de tronçons (13) formant des droites ou des arcs de grand rayon. Chaque tronçon est usiné séparément avec un système de fixation intermédiaire (14, 15). Le repérage se fait au niveau de l'élément central, dans la mesure où la courbure est régulière.

Le découpage d'une arcade en un ensemble de tronçons est effectué en tenant compte de l'angle d'attaque de l'outil d'usinage pour que celui-ci puisse travailler dans les meilleures conditions possibles, de préférence selon trois axes, pour des raisons de simplicité.

Dans la mesure où l'usinage est réalisé à l'aide d'une fraise (33) représentée à la figure 6, dans le cas de l'usinage d'une couronne, le diamètre (D) de l'extrémité de la fraise est au moins égal au double de la partie la plus en contre-dépouille devant être usinée. Ceci permet de disposer d'un outil d'usinage qui travaille seulement selon trois axes. Dans un premier temps, l'élément à usiner étant solidaire d'un support (34), il est procédé à l'usinage de la face externe de la prothèse (35), par déplacement axial de la fraise (33) et par déplacement autour de la prothèse, comme montré à la figure 7. Après retournement de la pièce (35), il est procédé à l'usinage de l'intérieur de celle-ci, comme montré à la figure 8. L'usinage des sillons est effectué par une fraise spéciale dite fraise fissure.

La séparation de la pièce prothétique et de son support est réalisée après finition de la prothèse, et avant polissage de celle-ci.

Ce procédé permet également la réalisation de couronnes à incrustation esthétique.

Il peut s'agir, par exemple, d'une couronne céramo-métallique, comme montré à la figure 9, ou d'une couronne métallique comportant une incrustation esthétique en résine, comme montré à la figure 10.

Les contraintes prises en compte par le logiciel ne sont pas les mêmes dans les deux cas puisque, dans le cas d'une couronne comportant une partie métallique (36) et une partie céramique (37), la partie céramique peut s'étendre jusqu'au contact de la gencive (38), tandis que dans le cas d'une couronne présentant une partie métallique (39) et une incrustation (40) en résine, cette dernière ne doit pas venir au contact de la gencive (38), nécessitant un léger retour (42) du métal à ce niveau.

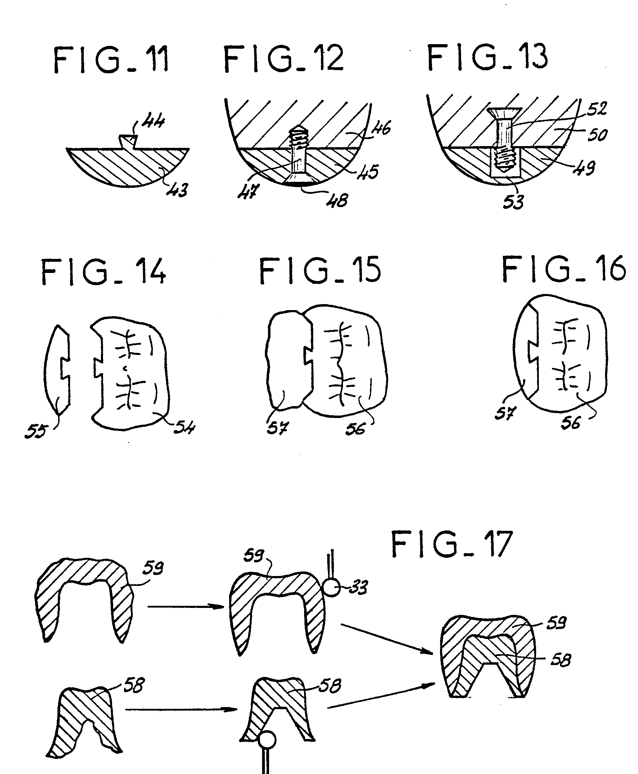

Les incrustations peuvent être fixées sur la couronne par différents systèmes connus, usinés automatiquement en même temps que les pièces par la machine outil à commande numérique. C'est ainsi que la facette usinée (43), représentée à la figure 11, comporte un système de fixation par queue d'aronde (44) sur la couronne. La facette (45) représentée à la figure 12 est fixée par vissage sur la partie métallique (46), à l'aide d'une vis (47) engagée depuis l'extérieur, avec dépôt d'un joint esthétique (48) recouvrant la tête de la vis. Dans la forme d'exécution représentée à la figure 13, une facette (49) est fixée sur la partie métallique (50) à l'aide d'une vis (52) engagée depuis la partie métallique vers la facette, qui présente à cet effet un perçage taraudé (53).

Selon un premier mode de réalisation d'une couronne comportant une incrustation esthétique, la couronne métallique (54) et la facette (55) en résine ou en céramique, représentées à la figure 14, sont usinées de manière définitive indépendamment l'une de l'autre, en tenant compte, lors de l'usinage de la couronne, de l'épaisseur de la facette, du système de fixation de celle-ci et du type d'inclusion. Après fixation de la facette (55) sur la couronne (54), la prothèse est entièrement terminée.

Selon un second mode de mise en œuvre illustré aux figures 15 et 16, ce procédé consiste tout d'abord à usiner la partie métallique (56) de la couronne en tenant compte, lors de l'usinage de celle-ci, de l'épaisseur de la facette (57), du système de fixation de celle-ci et du type d'inclusion, à fixer la facette (57) sur la partie métallique (56), puis à réaliser l'usinage de la facette.

Dans le cas de la réalisation d'une couronne céramo-métallique, c'est-à-dire comprenant une partie intérieure métallique et une coiffe en céramique, un premier mode de mise en œuvre de ce procédé consiste, disposant en stock de couronnes métalliques (58) et de facettes en céramique (59) pré-usinées, de telle sorte que la face externe de la partie métallique possède le même profil que la face interne de la facette, comme montré à la figure 17, à choisir un couple couronne métallique facette, puis à usiner la face interne de la partie métallique à la forme du moignon, et la face externe de la facette en fonction de l'enveloppe et de l'occlusion, ces différents usinages, étant effectués selon les indications données par la saisie des formes et les éléments du logiciel.

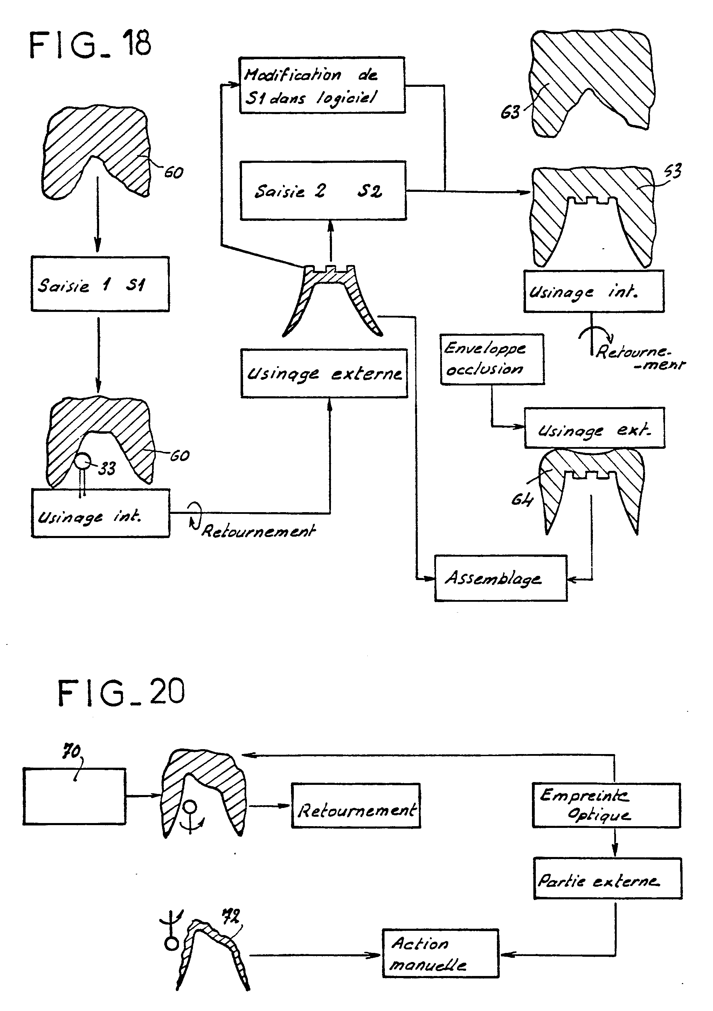

Un second mode de mise en œuvre pour l'obtention d'une couronne céramo-métallique consiste, en partant d'une saisie des formes effectuée en bouche, à réaliser, dans un bloc métallique (60), l'usinage des faces interne et externe de la couronne métallique (62), à faire une nouvelle saisie de la face externe de la couronne métallique, à réaliser en fonction de celle-ci et à partir d'un bloc de céramique (63) l'usinage de la face interne de la facette, puis en fonction de l'enveloppe et de l'occlusion, l'usinage de la face externe de celle-ci, avant de procéder à l'assemblage de la couronne métallique (62) et de la facette (64), comme montré à la figure 18.

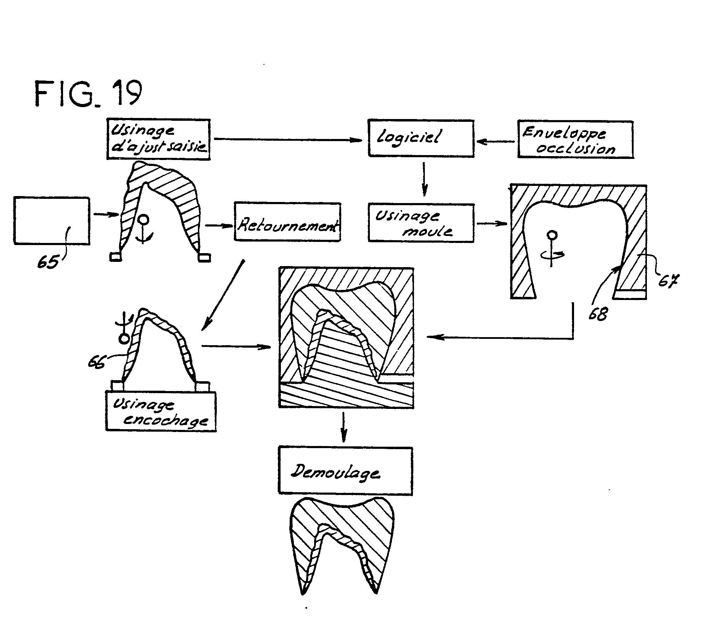

Selon une possibilité, dans le cas d'une couronne comprenant un support métallique et une facette en résine, ce procédé consiste, partant d'une saisie des formes effectuée en bouche, à réaliser, dans un bloc métallique (65), l'usinage de la face interne de la couronne métallique à la forme du moignon, puis un encochage (66) de sa face externe. En fonction de l'enveloppe et de l'occlusion de la prothèse considérée, il convient ensuite d'usiner dans un bloc de matière (67), le contour extérieur (68) de la couronne. L'assemblage de la partie métallique et du bloc de matière (67) usiné assure la formation d'un moule désigné par la référence générale (69) à la figure 19, dans lequel est injecté de la résine formant la facette de la prothèse.

Une autre solution consiste, comme illustré à la figure 20, partant d'un bloc métallique (70), à usiner automatiquement les faces interne et externe de celui-ci, afin d'obtenir la partie métallique (72) de la couronne, puis à réaliser, manuellement, le montage sur celle-ci d'une facette pré-usinée en résine ou en céramique, et de réaliser le façonnage manuel de celle-ci.

Afin de faciliter la fixation des différentes prothèses obtenues par le procédé selon l'invention, il est intéressant d'utiliser, dans certains cas, des pivots pré-calibrés possédant, à leur partie externe, un système de fixation standard, tel que par vis, et d'usiner à l'aide de la machine-outil à commande numérique la contrepartie adaptable sur la prothèse.

**Revendications**

1. Procédé de réalisation d'une prothèse dentaire fixe, telle que couronne ou bridge, mettant en

œuvre une saisie de la forme de la zone d'implantation, et consistant en fonction de cette saisie de forme qui est traitée par un calculateur définissant la forme de la prothèse à réaliser, à usiner ladite prothèse à l'aide d'un centre de travail assisté de ce calculateur, caractérisé en ce qu'il consiste à utiliser une machine-outil équipée d'une fraise travaillant selon trois axes, et en ce qu'il consiste, en tenant compte de l'angle d'attaque de l'outil d'usinage, c'est-à-dire la direction possible de pénétration de l'outil dans la matière, à décomposer ladite prothèse en un ou plusieurs éléments unitaires, chaque élément étant une pièce dont toutes les surfaces peuvent être usinées à l'aide de cette machine, puis à usiner indépendamment au moins une partie de chacun des éléments, et enfin à les assembler, et éventuellement à terminer l'usinage.

2. Procédé selon la revendication 1, caractérisé en ce que, dans le cas de la réalisation d'un ensemble prothétique de plusieurs éléments, tel qu'un bridge (2), il consiste à déterminer la forme de la partie de la prothèse située du côté de la gencive en tenant compte dans le logiciel de trois paramètres, à savoir: les surfaces (3, 4) des deux extrémités de la prothèse et le point bas (5) du pontique, à réaliser le positionnement théorique des dents que comporte la prothèse, en faisant tout d'abord apparaître la totalité de l'arcade (6), puis en déterminant des plans proximaux (7, 8), dont le nombre est fonction de la longueur de l'arcade, chaque plan proximal (7) étant défini comme étant médian à la droite (9) réunissant deux points de contact de la prothèse avec les dents (10) demeurant en bouche, ou un point de contact et un point de contact entre deux dents théoriques, puis à placer les dents théoriques (12) sur les plans proximaux, en leur faisant, éventuellement, subir une déformation, en vue du respect de l'enveloppe, et enfin à sectionner l'arcade en un ensemble de tronçons de droites (13) ou d'arcs de grand rayon, en tenant compte de l'angle d'attaque de l'outil d'usinage, puis à usiner chaque tronçon avec ménagement d'un système de fixation intermédiaire (14, 15) entre deux éléments appartenant à deux tronçons adjacents.

3. Procédé selon la revendication 1, caractérisé en ce que, dans le cas d'une couronne à incrustation esthétique, il consiste à usiner séparement la couronne (54) et la facette (55) en tenant compte, lors de l'usinage de la couronne, de l'épaisseur de la facette, du système de fixation de celle-ci et du type d'inclusion, et à fixer la facette sur la couronne.

4. Procédé selon la revendication 1, caractérisé en ce que, dans le cas d'une couronne à incrustation esthétique, il consiste tout d'abord à usiner la couronne (56) en tenant compte, lors de l'usinage de celle-ci, de l'épaisseur de la facette (57), du système de fixation de celle-ci et du type d'inclusion, à fixer la facette (57) sur la couronne (56), puis à réaliser l'usinage de la facette.

5. Procédé selon la revendication 1, caractérisé en ce que, dans le cas d'une couronne céramo-métallique, c'est-à-dire comprenant une partie intérieure métallique et une coiffe ou facette en céramique, il consiste, disposant en stock des couronnes métalliques (58) et des facettes (59), pré-usinées de telle sorte que la face externe de la partie métallique possède le même profil que la face interne de la facette, à choisir un couple couronne métallique-facette, puis à usiner la face interne de la partie métallique (58) à la forme du moignon et la face externe de la facette (59) en fonction de l'enveloppe et de l'occlusion, ces usinages étant effectués selon les indications données par la saisie des formes et les éléments du logiciel.

6. Procédé selon la revendication 1, caractérisé en ce que, dans le cas d'une couronne céramo-métallique, c'est-à-dire comprenant une partie intérieure métallique et une coiffe ou facette en céramique, il consiste, partant d'une saisie des formes effectuée en bouche, à réaliser, dans un bloc métallique (60), l'usinage des faces interne et externe de la couronne métallique, à faire une nouvelle saisie de la face externe de la couronne métallique (62), à réaliser en fonction de celle-ci l'usinage de la face interne de la facette (64), puis en fonction de l'enveloppe et de l'occlusion l'usinage de la face externe de la facette, avant de procéder à l'assemblage de la couronne métallique et de la facette.

7. Procédé selon la revendication 1, caractérisé en ce que, dans le cas d'une couronne comprenant un support métallique et une coiffe ou facette en résine, il consiste, partant d'une saisie des formes effectuée en bouche, à réaliser, dans un bloc métallique (65), l'usinage de la face interne de la couronne métallique pour son adaptation sur le moignon, et un encochage (66) de sa face externe puis, en fonction de l'enveloppe et de l'occlusion de la prothèse considérée, à usiner en creux dans un bloc de matière (67) le contour extérieur de la prothèse, de façon à former un moule (68), à placer celui-ci sur la partie métallique, et à injecter de la résine dans l'espace entre le moule et la partie métallique.

8. Procédé selon la revendication 1, caractérisé en ce que, dans le cas d'une couronne comprenant un support métallique et une coiffe ou facette en résine ou céramique, il consiste, partant d'une saisie des formes effectuée en bouche, à réaliser dans un bloc métallique (70) l'usinage des faces interne et externe de la partie métallique (72), puis à réaliser manuellement le montage et le façonnage sur celle-ci de la facette pré-usinée en résine ou en céramique.

9. Procédé selon l'une quelconque des revendications 1 à 8, caractérisé en ce qu'il consiste à utiliser des pivots précalibrés possédant, à leur partie externe, un système de fixation standard, tel que par vis, et à usiner à l'aide de la machine-outil à commande numérique la contrepartie adaptable sur la prothèse.

**Claims**

1. A process for the production of a fixed dental prosthesis, such as a crown or a bridge, making use of a recording of the shape of the implantation area, and consisting, in accordance with this recording of shape which is dealt with by a computer that specifies the shape of the prosthesis to be produced, in machining the said prosthesis by means of a machining centre assisted by this computer, characterised in that it consists in using a machine-tool equipped with a rotary tool operatable in three axes, and that it also consists, taking account of the angle of attack of the machining tool, i.e., of the possible direction of penetration of the tool into the material, in subdividing the said prosthesis into one or more unit parts, each part being such that all its surfaces can be machined by this machine, then machining at least one part of each of these units separately, and finally asembling them and possibly finishing off the machining.

2. A process according to Claim 1, characterised in that, in the case where a prosthetic assembly of several portions, such as a bridge (2) is produced, it consists in determining the shape of the portion of the prosthesis situated against the gum, taking account in the software of three parameters, namely: the surfaces (3, 4 ) of the two extremities of the prosthesis and the low point (5) of the bridge in working out the theoretical positions of the teeth that the prosthesis comprises, first of all by making the whole of the dental arch (6) appear, then determining the proximal planes (7, 8) the number of which depends on the length of the dental arch, each proximal plane (7) being defined as being the median to the straight line (9) that joins two points of contact of the prosthesis with the teeth (10) that remain in the mouth, or one such point of contact and a point of contact between two theoretical teeth, then by placing the theoretical teeth (12) on the proximal planes, possibly making them undergo deformation with a view to maintaining the shape of the envelope and finally dividing up the dental arch into a series of straight-line segments (13) or large-radius curve segments taking into account the angle of attack of the machining tool, then machining each segment with arrangements for an intermediate fixation system (14, 15) between two units belonging to two adjacent segments.

3. A process according to Claim 1, characterised in that, in the case of a crown with cosmetic inlays, it consists in machining the crown (54) and the facing (55) separately, taking account when machining the crown of the thickness of the facing, the system of fixation of the latter and of the type of inclusion, and in fixing the facing to the crown.

4. A process according to Claim 1, characterised in that, in the case of a crown with cosmetic inlays, it consists in first machining the crown (56), taking account when machining it of the thickness of the facing (57), of the system of fixation of the latter and of the type of inclusion, in fixing the facing (57) to the crown (56) and in then performing the machining of the facing.

5. A process according to Claim 1, characterised in that, in the case of a ceramic/metallic crown, that is to say a crown comprising an interior metallic portion and a capping or facing of ceramics, it consists in that, having a stock of metallic crowns (58) and facings (59) pre-machined in such a way that the external surface of the metallic portion possesses the same profile as the internal surface of the facing, selecting a pair that make up a metallic crown with facing, then machining the internal surface of the metallic portion (58) to fit the shape of the tooth stump and the external surface of the facing (59) in accordance with the envelope and the occlusion, these machining processes being performed according to information given by the recording of shapes and the components of the software.

6. A process according to Claim 1, characterised in that, in the case of a ceramic/metallic crown, that is to say a crown comprising an interior metallic portion and a capping or facing of ceramics, it consists, starting from a recording of shapes effected in the mouth, in performing, on a metallic block (60), the machining of the internal and external surfaces of the metallic crown, in making a new recording of the external surface of the metallic crown (62), in performing in accordance with the latter the machining of the internal surface of the facing (64), then performing the machining of the external surface of the facing in accordance with the envelope and the occlusion, before proceeding to assemble the metallic crown and the facing together.

7. A process according to Claim 1, characterised in that, in the case of a crown comprising a metallic support and a capping or facing of resin, it consists, starting from a recording of shapes effected in the mouth, in performing on a metallic block (65) the machining of the internal surface of the metallic crown to adapt it to the tooth stump, and of its external surface to produce notches (66), then, in accordance with the envelope and the occlusion of the prosthesis in question, in machining out from a block of material (67) the hollow image of the external contour of the prosthesis in such a way as to form a mould (68), in placing the latter on top of the metallic portion, and in injecting resin into the space between the mould and the metallic portion.

8. A process according to Claim 1, characterised in that, in the case of a crown comprising a metallic support and a capping or facing of resin or ceramics, it consists, starting from a recording of shapes effected in the mouth, in performing on a metallic block (70) the machining of the internal and external surfaces of the metallic portion (72), then performing the mounting manually and shaping on the mounted assembly the pre-machined resin or ceramics facing.

9. A process according to any of Claims 1 to 8, characterised in that it consists in using pre-calibrated pivots possessing in their external portion, a standard fication system, such as a screw, and in machining the adaptable counterpart on the prosthesis by means of the numerically-controlled machine-tool.

## Patentansprüche

1. Verfahren zur Herstellung einer festen Zahnprothese, z.B. einer Krone oder Brücke, bei dem eine Aufnahme der Form der Implantationszone durchgeführt wird und die Krone in Abhängigkeit von dieser Aufnahme, die in einem Rechner verarbeitet wird, der die Form der herzustellenden Prothese festlegt, mit Hilfe eines von diesem Rechner unterstützten Bearbeitungszentrums bearbeitet wird, dadurch gekennzeichnet,

dass eine mit einem in drei Achsen arbeitenden Fräser ausgestattete Werkzeugmaschine verwendet wird,

dass die Prothese unter Berücksichtigung des Angriffswinkels des Bearbeitungswerkzeugs, d.h. der möglichen Eindringrichtung des Werkzeugs in das Material, in ein oder mehrere einteilige Elemente zerlegt wird, von denen jedes ein Teil bildet, von dem alle Oberflächen mit Hilfe dieser Maschine bearbeitet werden können,

dass sodann wenigstens ein Teil jedes Elements unabhängig bearbeitet wird,

und dass schliesslich die Elemente zusammengesetzt und gegebenenfalls einer Endbearbeitung unterzogen werden.

2. Verfahren nach Anspruch 1, dadurch gekennzeichnet, dass es bei der Herstellung einer aus mehreren Elementen bestehenden Prothesenanordnung, z.B. einer Brücke (2) darin besteht,

dass die Form des auf der Zahfleischseite liegenden Prothesenteils bestimmt wird, wobei in dem Rechnerprogramm drei parameter, nämlich die Oberflächen (3, 4) der beiden Endbereiche der Prothese und der untere Brückenpunkt (5) berücksichtigt werden,

dass die theoretische Positionierung der die Prothese bildenden Zähne durchgeführt wird, wobei man zunächst den gesamten Zahnbogen (6) erscheinen lässt, sodann die Proximalebenen (7, 8) bestimmt, deren Anzahl von der Länge des Zahnbogens abhängig ist, wobei jede Proximalebene (7) als Mittelebene zu der Geraden (9) definiert ist, die die Berührungspunkte der Prothese mit den im Mund verbleibenden Zähnen (10) oder einen Berührungspunkt und einen Berührungspunkt zwischen zwei theoretischen Zähnen miteinander verbindet,

dass dann die theoretischen Zähne auf den Proximalebenen plaziert werden, indem man sie gegebenenfalls zur Berücksichtigung der Umhüllenden einer Verformung unterzieht,

und dass der Zahnbogen unter Berücksichtigung des Angriffswinkels des Bearbeitungswerkzeugs in eine Gruppe von Geraden (13) oder Bogenabschnitten mit grossen Krümmungsradius unterteilt und dann jeder Abschnitt bearbeitet wird, wobei zwischen zwei Elementen, die zu zwei benachbarten Abschnitten gehören, ein Zwischenbefestigungssystem (14, 15) vorgesehen wird.

3. Verfahren nach Anspruch 1, dadurch gekennzeichnet, dass bei der Herstellung einer Krone mit kosmetischem Einsatz Krone (54) und Facette (55) getrennt bearbeitet werden, wobei bei der Bearbeitung der Krone die Dicke der Facette, deren Befestigungssystem und die Art der Einschliessung berücksichtigt werden und die Facette an der Krone befestigt wird.

4. Verfahren nach Anspruch 1, dadurch gekennzeichnet, dass im Fall einer Krone mit kosmetischem Einsatz zunächst die Krone (56) bearbeitet wird, wobei die Dicke der Facette (57), deren Befestigungssystem und die Art der Einschliessung berücksichtigt werden, sodann die Facette (57) an der Krone (56) bearbeitet wird und schliesslich die Bearbeitung der Facette durchgeführt wird.

5. Verfahren nach Anspruch 1, dadurch gekennzeichnet, dass es bei der Herstellung einer Keramik-Metall-Krone, d.h. einer Krone mit einem inneren Metallteil und einer Kappe oder Facette aus Keramik, darin besteht, dass Metall-Kronen (58) und Facetten (59) auf Lager angeordnet werden, die so vorbearbeitet sind, dass die Aussenseite des Metallteils dasselbe Profil hat wie die Innenseite der Facette, dass ein aus Metall-Krone und Facette bestehenden Paar ausgewählt wird, dass die Innenseite des Metallteils (58) entsprechend der Form des Zahnstumpfs und die Aussenseite der Facette in Abhängigkeit von der Umhüllenden und dem Zahnschluss bearbeitet werden, wobei diese Bearbeitungen nach den Angaben erfolgen, die durch die Aufnahme der Formen und die Elemente des Rechnerprogramms gegeben sind.

6. Verfahren nach Anspruch 1, dadurch gekennzeichnet, dass es bei der Herstellung einer Keramik-Metall-Krone, d.h. einer Krone mit einem inneren Metallteil und einer Kappe oder Facette aus Keramik, darin besteht, dass ausgehend von einer im Mund durchgeführten Aufnahme der Formen in einem Metallblock die Innenseite und die Aussenseite der Metall-Krone (62) bearbeitet werden, dass in Abhängigkeit von der Aussenseite der Metall-Krone die Innenseite der Facette (64) bearbeitet wird, und dass sodann in Abhängigkeit von der Umhüllenden und dem Zahnschluss die Aussenseite der Facette bearbeitet wird, bevor die Metall-Krone und die Facette zusammengesetzt werden.

7. Verfahren nach Anspruch 1, dadurch gekennzeichnet, dass es bei der Herstellung einer Krone mit einem Metallträger und einer Kappe oder Facette aus Harz darin besteht, das ausgehend von einer im Mund durchgeführten Aufnahme der Formen in einem Metallblock (65) die Innenseite der Metall-Krone in Anpassung an den Zahnstumpf bearbeitet und an seiner Aussenseite mit einer Nutung (66) wird, dass in Abhängigkeit von der Umhüllenden und dem Zahnschluss der betrachteten Prothese in einem Materialblock (67) die Aussenkontur der Prothese als Hohlraum herausgearbeitet wird, so dass eine Giessform gebildet wird, dass diese Giessform auf dem Metallteil plaziert wird, und dass in den zwischen der Form und dem Metallteil bestehenden Zwischenraum Harz gegossen wird.

8. Verfahren nach Anspruch 1, dadurch gekennzeichnet, dass es bei der Herstellung einer Krone mit einem Metallträger und einer Kappe oder Facette aus Harz oder Keramik darin besteht, dass ausgehend von einer im Mund durchgeführten Aufnahme der Formen in einem Metallblock (70) die Innen- und Aussenseite des Metallteils in bearbeitet werden und dass dann auf dem Metallteil (72) die vorbearbeitete Facette aus Harz oder Keramik manuell montiert und ausgeformt wird.

9. Verfahren nach einem der Ansprüche 1 bis 8, dadurch gekennzeichnet, dass vorkalibrierte Stifte verwendet werden, die an ihrem äusseren Teil eine Standard-Befestigungssystem, z.B. mit Schrauben, besitzen und dass mit Hilfe der numerisch gesteuerten Werkzeugmaschine das auf der Prothese anzubringende Gegenstück bearbeitet wird.

FIG.1

FIG.2

FIG.3

FIG.4

FIG.5

FIG.6

FIG.7

FIG.8

FIG.9

FIG.10

FIG_11  FIG_12  FIG_13

FIG_14  FIG_15  FIG_16

FIG_17

# FIG_18

Modification de S1 dans logiciel

63

Saisie 1 S1

Saisie 2 S2

53

60

33 60

Usinage int.

Retournement

Usinage externe

Usinage int.

Retourne- -ment

Enveloppe occlusion

Usinage ext.

64

Assemblage

# FIG_20

70

Retournement

Empreinte Optique

Partie externe

72

Action manuelle

13

# FIG. 19